# EUROPÄISCHE PATENTSCHRIFT

(11) **EP 0 937 620 B1**
(45) Veröffentlichungstag und Bekanntmachung des Hinweises auf die Patenterteilung: **24.05.2006**
(21) Anmeldenummer: 98118433.6
(22) Anmeldetag: 29.09.1998
(51) Int. Cl.: B60T 13/66, B60T 8/32, B60T 8/94, B60T 17/22

(54) **Verfahren und Vorrichtung zur Steuerung einer Bremsanlage**
Method and device for controlling a brake system
Procédé et dispositif de contrôle d' un système de freinage

(30) Priorität: 21.02.1998 DE 19807369
(43) Veröffentlichungstag der Anmeldung: 25.08.1999
(73) Patentinhaber: ROBERT BOSCH GMBH, 70442 Stuttgart (DE)
(72) Erfinder: Schmidt, Guenther, 97941 Tauberbischofsheim (DE); Binder, Juergen, 70599 Stuttgart (DE); Winner, Hermann, 76229 Karlsruhe (DE); Gottwick, Ulrich, 70192 Stuttgart (DE)

(56) Entgegenhaltungen:
- EP-A- 0 386 953
- WO-A-97/32766
- DE-A- 19 732 884
- JONNER W -D ET AL: "ELECTROHYDRAULIC BRAKE SYSTEM - THE FIRS APPROACH TO BRAKE-BY-WIRE TECHNOLOGY" CURRENT AND FUTURE DEVELOPMENTS IN ABS/TCS AND BRAKE TECHNOLOGY,XX,XX, 1. Februar 1996 (1996-02-01), Seiten 105-112, XP000199045

## Beschreibung

### Stand der Technik

Die Erfindung betrifft ein Verfahren und eine Vorrichtung zur Steuerung einer Bremsanlage gemäß den Oberbegriffen der unabhängigen Patentansprüche.

Ein derartiges Verfahren bzw. eine derartige Vorrichtung ist beispielsweise aus dem SAE-Paper 960991 bekannt. Dort wird eine elektrohydraulische Bremsanlage beschrieben, bei welcher aus der Bremspedalbetätigung durch den Fahrer ein Bremswunsch des Fahrers abgeleitet wird. Dieser Bremswunsch wird gegebenenfalls unter Berücksichtigung von weiteren Betriebsgrößen in Sollbremsdrücke für die einzelnen Radbremsen umgerechnet. Die Sollbremsdrücke werden für jedes Rad durch Druckregelkreise auf der Basis des vorgegebenen Solldrucks sowie des im Bereich der Radbremse gemessenen Istbremsdrucks eingeregelt. Da der Bremsdruck in den Radbremsen bei einer derartigen elektrohydraulischen Bremsanlage abhängig vom Fahrerbremswunsch auf elektrischem Wege über Ventilanordnungen eingestellt und moduliert wird, sind im Fehlerfall Notbremsbetriebe sicherzustellen, die eine ausreichende Bremswirkung auch im Fehlerfall gewährleisten. Bei der bekannten Bremsanlage wird in diesem Zusammenhang ein Abschalten des elektrischen Systems und ein Umschalten auf eine hydraulische Bremse oder der elektrische Betrieb nur dreier Radbremsen vorgeschlagen. Damit können die meisten Fehler zufriedenstellend beherrscht werden, allerdings wird dennoch in einigen Fällen auf den hydraulischen Betrieb umgeschaltet.

Es ist Aufgabe der Erfindung, Notbremsbetriebe einer elektrisch gesteuerten Bremsanlage anzugeben, durch die so wenig wie möglich im Fehlerfall auf eine direkte mechanische Einwirkung des Fahrers auf die Radbremsen umgeschaltet werden muß.

Dies wird durch die kennzeichnenden Merkmale der unabhängigen Patentansprüche erreicht.

### Vorteile der Erfindung

Es wird ein Notbetriebssystem einer elektrisch gesteuerten Bremsanlage vorgestellt, bei welchem je nach Fehlerfall unterschiedliche Notbremsbetriebe eingeleitet werden. In vorteilhafter Weise wird ein vollständiges Abschalten der elektrischen Steuerung nur noch in wenigen, schwerwiegenden Fehlern erforderlich.

Dadurch wird die Verfügbarkeit der elektrischen Steuerung verbessert, ohne daß die Betriebssicherheit gefährdet ist.

Besonders vorteilhaft ist, daß auch im Fehlerfall eine gegenüber dem vollständigen Abschalten verbesserte Bremswirkung erreicht wird, insbesondere eine Bremskraftverstärkung stattfindet.

Als weiterer Notbremsbetrieb steht neben dem eingangs genannten 3-Rad-EHB-Betrieb eine Regelung zur Verfügung, bei der bei einem Fehler, der nur ein Rad einer Achse betrifft, ohne die Fähigkeit des Druckauf- und -abbaus an diesem Rad zu beeinträchtigen, eine gemeinsame Regelung der Achse dieses Rades im Rahmen eines Druckregelkreises stattfindet, wobei vorgesehen ist, dass bei einem Notbremsbetrieb die radindividuelle Antiblockierfunktion der betroffenen Achse abgeschaltet werden, während die Antiblockierfunktion an der anderen Achse erhalten bleibt. Damit wird die Anzahl der Notbremsbetriebe erhöht und das Bremsverhalten im Fehlerfall erheblich verbessert.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 ein bevorzugtes Ausführungsbeispiel einer elektrohydraulischen Bremsanlage, während in Figur 2 die die elektrohydraulische Bremsanlage steuernde Steuereinheit dargestellt ist. Figur 3 zeigt ein Flußdiagramm, das eine bevorzugte Realisierung der Notbetriebe einer elektrohydraulischen Bremsanlage als Programm eines Mikrocomputers darstellt.

### Beschreibung von Ausführungsbeispielen

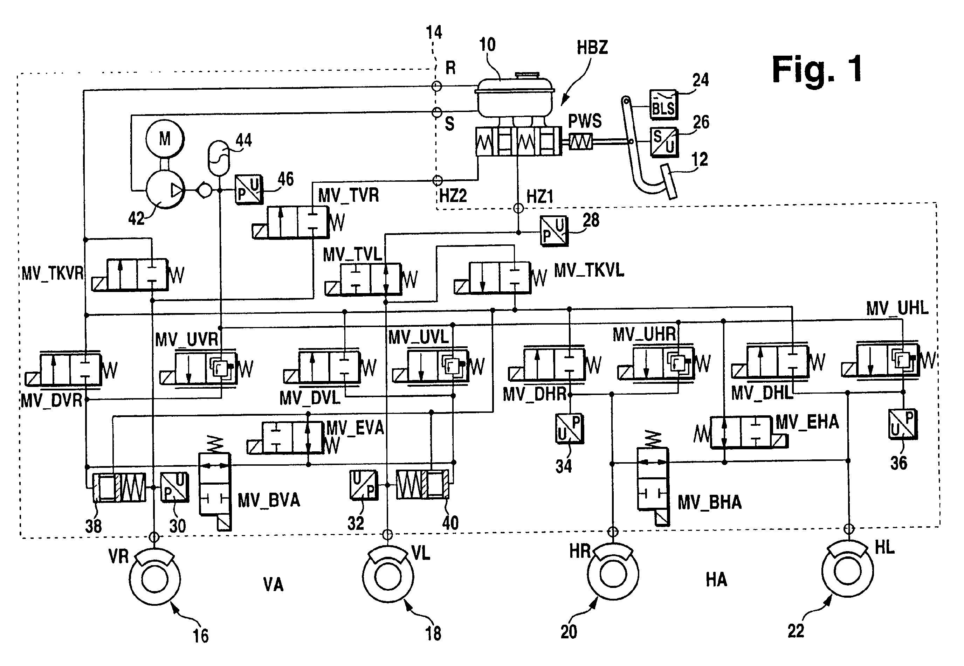

Figur 1 zeigt ein bevorzugtes Ausführungsbeispiel einer elektrohydraulischen Bremsanlage. Sie zeigt einen Hauptbremszylinder HBZ mit Vorratsbehälter 10, an den ein vom Fahrer betätigbares Bremspedal angebracht ist. Ferner ist ein Hydraulikaggregat 14 vorgesehen, welches Ventil- und Pumpenanordnungen zur Steuerung der Radbremsen 16, 18, 20 und 22 enthält. Mit dem Bremspedal 12 ist ein Bremspedalschalter 24 verbunden, welcher bei Betätigen des Bremspedals schließt, und eine Meßeinrichtung 26 zur Erfassung der Auslenkung des Bremspedals. Der Bremspedalschalter kann als einfacher Schließer ausgelegt sein, oder zur Verbesserung der Überwachbarkeit als doppelter Schalter mit einem Öffner und einem Schließer. Ebenso kann die Meßeinrichtung 26 zur Erfassung der Auslenkung des Pedals redundant ausgelegt werden. Ferner ist ein Pedalwegsimulator PWS vorgesehen, welcher für den Fahrer bei Betätigen des Bremspedals eine Gegenkraft simuliert. An den Hauptbremszylinder HBZ sind die zwei Bremskreise HZ1 und HZ2 angeschlossen. In diesen sind jeweils ein Trennventil MV_TVR und MV_TVL eingefügt, welches bei elektrisch gesteuerter Bremsanlage durch Bestromung geschlossen wird. Vor dem Trennventil mißt in zumindest einem der Bremskreise ein Drucksensor 28 den vom Fahrer über die Bremspedalbetätigung aufgebrachten Druck. Bei geschlossenen Trennventilen ist der Hauptbremszylinder hydraulisch vom Druckregelsystem abgetrennt. Im Druckregelsystem sind für jede Radbremse ein Druckmodulator für die Bremsdruckregelung enthalten. Ein Druckmodulator besteht dabei aus je einem Einlaßventil (MV_UVR, MV_UVL, MV_UHR, MV_UHL), je einem Auslaßventil (MV_DVR, MV_DVL, MV_DHR, MV_DHL) und je einem Drucksensor 30, 32, 34 und 36, der den Druck in der zur Radbremse führenden Leitung mißt. In den beiden Vorderraddruckmodulatoren befindet sich je ein Medientrennerkolben 38 und 40 zwischen den Ventilen (Ein- und Auslaßventil) und den Drucksensoren bzw. der Radbremse. Die Druckmodulatoren sind über Ausgleichsventile MV_BVA und MV_BHA verbunden, die bei Bestromung voneinander unabhängig gesteuert werden können. Ferner sind Entlastungsventile MV_EVA bzw. MV_EHA für jede Achse vorgesehen, die in unbestromtem Zustand den Druckabbau aus den Raddruckmodulatoren einer Achse erlauben. Sie verbinden die Druckmodulatoren einer Achse mit den zum Vorratsbehälter 10 führenden Rückführleitungen. Im elektrisch gesteuerten Betriebszustand sind diese beiden Ventile permanent bestromt, d.h. geschlossen. Ferner ist jeweils ein Temperaturkompensationsventil MV_TKVL und MV_TKVR für jeden Vorderraddruckmodulator vorgesehen. Diese Ventile sind unbestromt geschlossen und werden zum Druckabbau aus dem Druckmodulator eines Vorderrades durch Bestromung geöffnet, wenn bestimmte Bedingungen, insbesondere eine sehr lange Bremsdauer, vorliegen. Die Temperaturkompensationsventile verbinden die Bremsleitung zur Radbremse mit der Rücklaufleitung. Die Energie für die Bremsdruckmodulation kommt aus einer von einem Elektromotor angetriebenen Einkolben-Hochdruckpumpe 42. Diese ist an einen Hochdruckspeicher 44 angeschlossen, der als Zwischenpuffer dient und dessen Druck durch einen Drucksensor 46 erfaßt wird. Die Druckleitung der Pumpe 42 führt zu den Einlaßventilen der Radbremsen, während die Saugleitung der Pumpe 42 mit dem Vorratsbehälter 10 verbunden ist. Bezüglich Einzelheiten der hydraulischen Schaltung wird auf das in Figur 1 dargestellte bevorzugte Ausführungsbeispiel verwiesen. Die Entlastungsventile MV_EVx und die Temperaturkompensationsventile MV_TKx entfallen in einem Ausführungsbeispiel.

Die nachfolgend beschriebene erfindungsgemäße Vorgehensweise wird jedoch nicht nur in Verbindung mit einer solchen Hydraulikschaltung vorteilhaft angewendet, sondern überall dort, wo Notbremsbetriebe im Fehlerfall einer elektrisch gesteuerten Bremsanlage eingerichtet werden müssen.

Im Normalbetrieb arbeitet die in Figur 1 beschriebene Bremsanlage wie folgt. Der Fahrer tritt auf das Bremspedal. Er spürt dabei eine wegabhängige Gegenkraft. Diese Wegabhängigkeit wird durch die definierte Charakteristik des Pedalwegsimulators gebildet. Bei Sensierung eines Bremswunsches über den Pedalwegsensor, den Bremspedalschalter und/oder den Drucksensor werden die Trennventile (MV_TVR und MV_TVL) und die Entlastungsventile (MV_EVA und MV_EHA) geschlossen. Im Hauptbremszylinder HBZ baut sich ein Druck auf, der aus der Pedalkraft resultiert. Aus den Signalen des Bremslichtschalters 24, des Wegsensors 26 und/oder des Drucksensors 28 wird der Bremswunsch des Fahrers beispielsweise als Sollverzögerung oder als Sollbremskraft errechnet. Aus diesem Bremswunsch werden die einzelnen Sollradbremsdrücke gebildet. Je nach Fahrzustand und Schlupfbedingung werden diese Drücke modifiziert und über die Raddruckmodulatoren durch Ventilbestromungen eingeregelt. Im geschlossenen Regelkreis werden bei jeder Radbremse die aktuellen Drücke an den Raddrucksensoren für den Soll-Ist-Abgleich herangezogen. Bei unterschiedlichen Solldrücken im linken und rechten Rad einer Achse werden die Ausgleichsventile geschlossen und in jeder Radbremse der vorgegebene Solldruck durch Ansteuern der Einlaß- und Auslaßventile im Sinne einer Regelung des Ist-Bremsdruckes auf den Sollbremsdruck eingeregelt. Zum Druckaufbau an einer Radbremse wird das Einlaßventil so weit bestromt, daß sich der gewünschte Solldruck in der Radbremse mit der gewünschten Dynamik ausbildet. Eine Druckabnahme wird entsprechend durch Bestromung des Auslaßventils erreicht, wobei Bremsflüssigkeit in den Vorratsbehälter über die Rücklaufleitung zurückfließt. Die Entlastungsventile kommen im Fehlerfall des Systems zur Wirkung. Wenn während einer Bremsung das elektrische System ausfällt, fallen alle Ventile in ihren unbestromten Zustand zurück. Die Entlastungsventile öffnen dann die Druckmodulatoren zur Rücklaufleitung, so daß kein Bremsdruck eingesperrt werden kann. Ebenso gestatten diese Ventile im Ruhezustand den Volumenausgleich zum Behälter bei Temperaturschwankungen.

Eine Betätigung der Pumpe 42 findet bei aktivem Bremsvorgang und/oder bei einem Absinken des Speicherdrucks im Speicher 44 unter einen vorbestimmten Wert statt. Neben dieser Funktion wird der erfaßte Speicherdruck 46 auch im Rahmen der Regelung ausgewertet, da er im wesentlichen den am Eingang der Einlaßventile liegenden Druck repräsentiert.

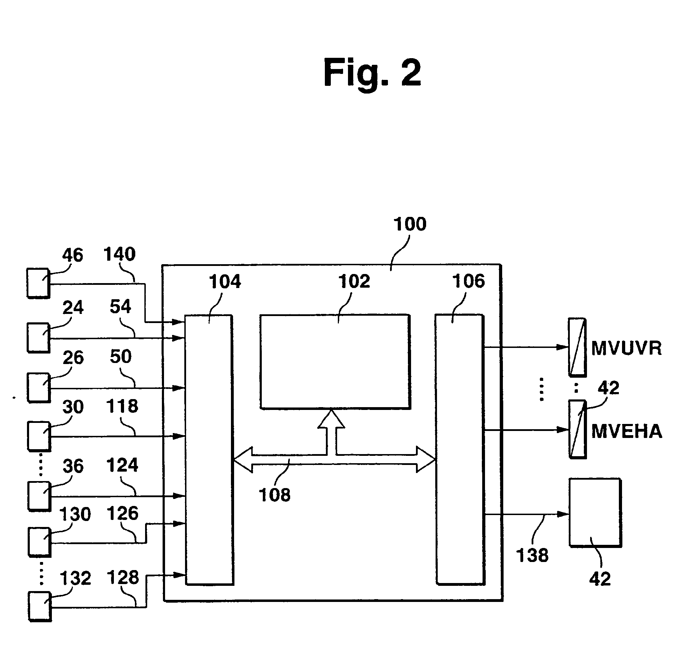

Die elektrisch betätigbaren Ventile sowie die Pumpe 42 werden von wenigstens einer elektronischen Steuereinheit angesteuert, die in Figur 2 skizziert ist. Sie umfaßt dabei wenigstens einen Mikrocomputer 102, eine Eingangsschaltung 104, eine Ausgangsschaltung 106 und ein diese Elemente verbindendes Bussystem 108 zum gegenseitigen Datenaustausch. Der Eingangsschaltung 104 sind die Leitungen 50 und 54 von Bremspedalschalter 24 und Pedalwegsensor 26 zugeführt. Ferner verbinden Eingangsleitungen 118 bis 124 die Eingangsschaltung 104 mit den jeder Radbremse zugeordneten Sensoren 30 bis 36. Ferner ist eine Eingangsleitung 140 vorgesehen, die von der Meßeinrichtung 46 zur Erfassung des Speicherdrucks der Eingangsleitung 104 zugeführt ist. Weitere Eingangsleitungen 126 bis 128 verbinden die Eingangsschaltung 104 mit Meßeinrichtungen 130 bis 132 zur Erfassung weiterer Betriebsgrößen der Bremsanlage, des Fahrzeugs und/oder dessen Antriebseinheit. Derartige Betriebsgrößen sind beispielsweise die Radgeschwindigkeiten, gegebenenfalls das von der Antriebseinheit abgegebene Motormoment, Achslasten, der Druck in der Bremsleitung (Sensor 28), etc. An die Ausgangsschaltung 106 sind mehrere Ausgangsleitungen angeschlossen. Beispielhaft sind die Ausgangsleitungen dargestellt, über welche die Ventile der Druckmodulatoren betätigt werden. Über eine weitere Ausgangsleitung 138 wird die Pumpe 42 angesteuert. Die Steuereinheit 100 steuert die Bremsanlage abhängig von den zugeführten Signalgrößen im oben dargestellten Sinne.

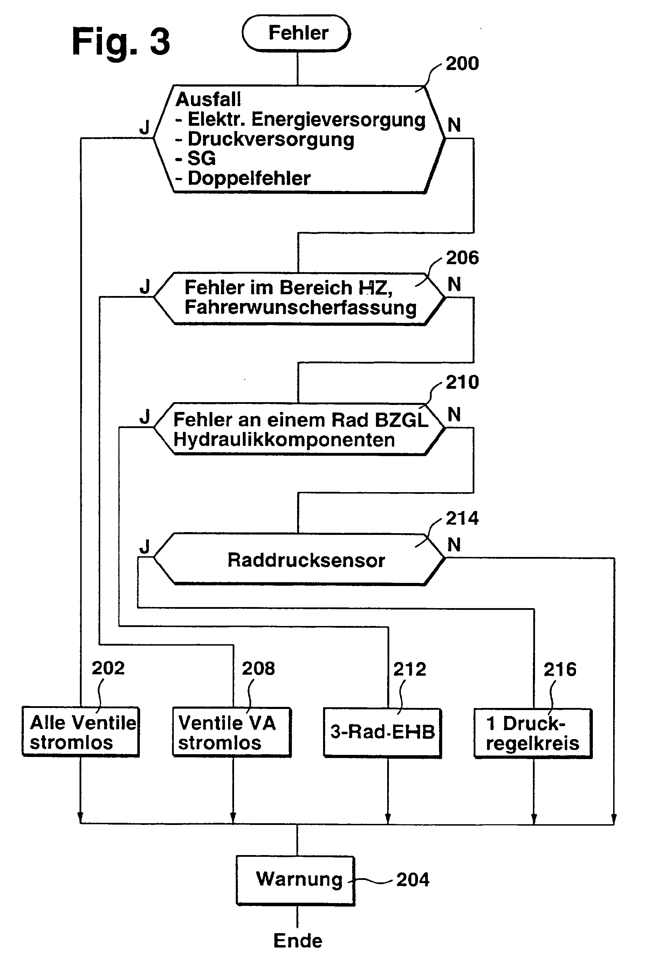

In Figur 3 ist ein bevorzugtes Ausführungsbeispiel für Notbremsbetriebe und deren Auswahl bei einer elektrohydraulischen Bremsanlage dargestellt. Das skizzierte Programm läuft bei wenigstens einem erkannten Fehler ab, solange die Fehlerüberwachung aktiv ist, d.h. wenn die elektrische Bremsensteuerung nicht vollständig abgeschaltet ist. Die Fehlerüberwachung selbst, d.h. die Ermittlung der Fehlerart, findet in anderen, hier nicht speziell aufgeführten Programmen statt.

Nach Start des Programms bei wenigstens einem erkannten Fehler wird im ersten Schritt 200 überprüft, ob ein Ausfall der elektrischen Energieversorgung, der hydraulischen Druckversorgung, ein interner Fehler der Steuereinheit oder ein Doppelfehler, d.h. zumindest je ein Fehler an verschiedenen Achsen vorliegt. Der Ausfall der elektrischen Energieversorgung wird z.B. durch Überwachung der Batteriespannung und/oder des Generatorstroms erkannt, der Ausfall der Druckversorgung z.B. durch Überwachung auf Grenzwerte des Speicherdrucks und/oder des Speicherdruckgradienten. Interne Fehler des Steuergerät werden durch übliche Überwachungen der Komponenten, wie z.B. mittels eines Watchdogs, elektronische Speichertest, Potentialüberprüfungen, etc. festgestellt.

Ist einer dieser Fehler festgestellt worden, werden gemäß Schritt 202 alle Ventile stromlos geschaltet. Die elektrische Steuerung kann unter keinen Umständen mehr aufrechtgehalten werden. Im Rahmen dieses Notbremsbetriebs wird der Druckaufbau vom Fahrer durch Muskelkraft ohne Bremskraftunterstützung über den Hauptbremszylinder an der Vorderachse aufgebracht. Die Hinterachse bliebt ungebremst. Danach wird an den Fahrer eine Warnung ausgegeben (Schritt 204), z.B. über eine Warnlampe, die den Fahrer über den Fehler und/oder den Notbremsbetrieb informiert und das Programm beendet. Da die elektrische Steuerung abgeschaltet ist, bleibt der Notbremsbetrieb zumindest bis zum nächsten Start eines Betriebszyklus erhalten, das Programm wird nicht mehr durchlaufen.

Liegt keiner der in Schritt 200 beschriebenen Fehler vor, wird im Schritt 206 überprüft, ob ein Fehler im Bereich der Fahrerwunscherfassung, z.B. ein Ausfall eines Sensors, ein Fehler des Pedalwegsimulators, etc. vorliegt. Diese Fehler, vor allem Sensorausfälle werden z.B. durch Vergleich der Sensorsignalen miteinander und gegebenenfalls mit einem weiteren Sensorsignal festgestellt, oder durch Überprüfen des Signals des jeweiligen Sensors allein auf Grenzwerte.

Wird ein solcher Fehler erkannt, wird nach Schritt 208 ein Notbremsbetrieb eingeleitet, welcher zu einem Stromlosschalten der Ventile der Vorderachse führt. Dadurch muß der Druckaufbau an der Vorderachse wie oben vom Fahrer aufgebracht werden. Kann der fehlerhafte Sensor ermittelt werden, wird die Hinterachse weiterhin im elektrisch gesteuerten Betrieb behalten, wobei das fehlerfreie Sensorsignal zur Bildung des Bremswunsch herangezogen wird. Die Raddrucksensoren der Vorderachsbremse dienen in diesem Fall zur Überwachung der elektrischen Steuerung, indem deren Signale mit dem Fahrerwunsch verglichen werden. Bei unzulässigen Abweichungen liegt ein Doppelfehler vor, der dann zu einem Notbremsbetrieb nach Schritt 202 führt.

Liegt kein Fehler im Bereich der Fahrerwunschermittlung vor, wird im Schritt 210 überprüft, ob ein Fehler an einer Komponente des Hydraulikaggregats vorliegt. Zu dessen Feststellung sind umfangreiche Fehlerüberprüfungen vorgesehen. So wird z.B. außerhalb einer Bremsung für jedes Rad die Abweichung zwischen gemessenem Bremsdruck und Solldruck mit einer zulässigen Abweichung verglichen. Wird ferner eine unzulässige Speicherdruckänderung festgestellt, kann als fehlerhafte Komponente ein stark undichtes bzw. offenes Einlaßventil isoliert werden. Ist keine unzulässige Änderung des Speicherdrucks zu erkennen, wird ein nichtöffnendes Trennventil, ein nichtöffnendes Temperaturkompensationsventil oder eine verstopfte Leitung, im Falle der Hinterachsbremsen durch ein nichtöffnendes Entlastungs- oder Balanceventil bzw. eine verstopften Leitung erkannt. Bei Vorliegen einer Druckaufbauphase wird bei einer unzulässigen Abweichung des Istdrucks vom Solldruck und gleichzeitiger zu großer Aufbauzeit und unzulässigem Speicherdruckabfall ein undichtes Auslaßventil oder eine Leckage im Bereich der Bremsanlage zwischen dem Speicher und dem Medienbrenner erkannt. Liegt wenigstens eine der beiden letzten Bedingungen nicht vor, wird z.B. von einem nichtöffnenden Einlaßventil ausgegangen. Bei einem Druckabbau wird die Ansteuerzeit T auf Überschreiten einer maximalen Druckabbauansteuerzeit und der Speicherdruckgradient überprüft. Überschreitet die Abbauzeit die Maximalzeit und ist der Speicherdruckgradient unzulässig groß, wird ein nicht schließendes Einlaßventil angenommen. Ist eine der Bedingungen nicht erfüllt und weichen Radbremsistdruck und Radbremssolldruck unzulässig voneinander ab, kommt als Ursache ein nichtöffnendes Auslaßventil, ein hängender Medientrenner und/oder ein nichtöffnendes Temperaturkompensationsventil in Betracht.

Liegt einer dieser Fehler vor, wird gemäß Schritt 212 als Notbremsbetrieb ein sogenannter 3-Rad-EHB-Betrieb eingeleitet, indem das Balanceventil der Vorderachse geschlossen wird, so daß an dem Rad der Vorderachse, an dem der Defekt aufgetreten ist, kein Druck mehr aufgebaut wird. Da eine radindividuelle Regelung an diesem Rad nicht mehr möglich ist, sind radindividuelle Funktionen (z.B. Fahrdynamikregelung) abgeschaltet, die Antiblockierschutzfunktion kann jedoch für die restlichen drei Räder aktiv bleiben. Das stromlos geschlossene Abbauventil des isolierten Rades wird in regelmäßigen zeitlichen Abständen kurz angesteuert, um eine gelöste Bremse zu gewährleisten. Um einen starken Giermomentenaufbau zu vermeiden, ist eine Giermomentenbegrenzung, deren prinzipielle Funktionsweise aus dem Stand der Technik bekannt ist, vorteilhaft.

Wurde keiner der Fehler gemäß Schritt 210 ermittelt, wird im Schritt 214 überprüft, ob ein Raddrucksensor eindeutig defekt ist. Dies kann auf der Basis einer Hardwareüberprüfung erfolgen (z.B. Messen des Innenwiderstands, etc.).

In diesem Fall wird als Notbremsbetrieb gemäß Schritt 216 eine Regelung einer Achse im Rahmen eines Druckregelkreises eingeleitet. Dazu wird das Balanceventil der Achse des Rades, an dem der Fehler aufgetreten ist, geöffnet, und in beiden Radbremsen dieser Achse der Druck nach Maßgabe des Sollwerts und des Istwertes des Rades geregelt, dem der korrekt arbeitende Raddrucksensor zugeordnet ist. Radindividuelle Funktionen sind auch hier abzuschalten, wobei gegebenenfalls die ABS-Funktion für die andere, vom Notbremsbetrieb nicht betroffene Achse weiter aktiv sein kann.

Liegt auch der in Schritt 214 überprüfte Fehler nicht vor, wird wie nach den Schritten 202, 208, 212, 216, der Fahrer gewarnt, allerdings ohne Einschränkung oder nur Komforteinschränkungen wie z.B. ein härteres oder weicheres Pedal. Dies ist z.B. dann der Fall, wenn aufgrund der Änderung des Speicherdrucks beim Druckaufbau in den Rädern Luft in einer oder mehreren Radzangen festgestellt wurde.

In einer vorteilhaften Ausführung wird als Notbremsbetrieb eine Bremsung über Muskelkraftbetrieb an einem Rad und elektrischer Regelung an den restlichen drei Rädern vorgenommen. Dies vor allem dann, wenn sich ein Medientrenner nicht bewegen läßt. Das Rad, dem dieser Medienbrenner zugeordnet ist, wird vom Fahrer über den Hauptzylinder bedient, die restlichen drei Räder werden nach wie vor im elektrohydraulischen Betrieb geregelt.

Die geschilderten Notbremsbetriebe werden auch in Verbindung mit Fehlererkennungsmaßnahmen angewendet, die sich von den vorstehend dargestellten unterscheiden.

Wesentlich ist, daß bei einem schwerwiegenden Fehler wie ein Ausfall der elektrischen Energieversorgung, der Druckversorgung oder ein elektrischer Fehler der die Bremsen steuernden Steuereinheit die die Radbremsdrücke steuernde Ventilanordnungen stromlos geschaltet werden, daß bei einem Fehler in der Bremswunscherfassung nur die der Vorderachse zugeordneten Ventilanordnungen stromlos geschaltet werden, daß bei einem Fehler, der die Fähigkeit zum Druckaufbau oder Druckabbau an nur einem Rad betrifft (z.B. Fehler einer Ventilanordnung), eine elektrische Steuerung an nur drei Radbremsen vorgenommen wird und daß bei einem Fehler, der nur ein Rad einer Achse betrifft, ohne die Fähigkeit des Druckauf- und -abbaus an diesem Rad zu beeinträchtigen (z.B. ein Drucksensorfehler), eine gemeinsame Regelung einer Achse im Rahmen eines Druckregelkreises stattfindet.

## Patentansprüche

1. Verfahren zur Steuerung einer Bremsanlage eines Kraftfahrzeugs, bei welchem
- ein Bremswunsch in Sollradbremsdrücke für die einzelnen Radbremsen (16, 18, 20, 22) umgesetzt wird und
- der Radbremsdruck unter Berücksichtigung des gemessenen Radbremsdrucks auf den Sollradbremsdruck eingeregelt wird,
wobei eine Fehlerüberwachung vorgesehen ist, die unterschiedliche Fehlerarten ermittelt,
wobei in Abhängigkeit vorgegebener Fehlerarten verschiedene Notbremsbetriebe eingeleitet werden,
wobei als Notbremsbetrieb
- bei einem Fehler, der die Fähigkeit zum Druckaufbau oder Druckabbau an nur einem Rad betrifft, eine elektrische Steuerung der Radbremsen der drei restlichen Räder vorgenommen wird, insbesondere im Rahmen einer Giermomentenbegrenzung,
wobei vorgesehen ist, dass bei diesem Notbremsbetrieb die Antiblockierschutzfunktion für die restlichen drei Räder aktiv bleibt, und
- bei einem Fehler, der nur ein Rad einer Achse betrifft, ohne die Fähigkeit des Druckauf- und -abbaus an diesem Rad zu beeinträchtigen, eine gemeinsame Regelung der Achse dieses Rades im Rahmen eines Druckregelkreises stattfindet,
wobei vorgesehen ist, dass bei einem Notbremsbetrieb die radindividuelle Antiblockierfunktion der betroffenen Achse abgeschaltet werden, während die Antiblockierfunktion an der anderen Achse erhalten bleibt.

2. Verfahren nach Anspruch 1, daß als Notbremsbetrieb eine Bremsung über Muskelkraftbetrieb an einem Rad und elektrischer Regelung an den restlichen drei Rädern vorgenommen wird.

3. Verfahren nach einem der vorhergehenden Ansprüche, **dadurch gekennzeichnet, daß** der Fehler, der nur ein Rad einer Achse betrifft, ein Fehler im Bereich der Ventilanordnung des Hydraulikaggregats (14) ist.

4. Verfahren nach einem der vorhergehenden Ansprüche, **dadurch gekennzeichnet, daß** der Fehler, der nur ein Rad einer Achse betrifft, ohne die Fähigkeit des Druckauf- und -abbaus zu beeinträchtigen, ein Drucksensorfehler ist.

5. Verfahren nach einem der vorhergehenden Ansprüche, **dadurch gekennzeichnet, daß** bei dem Notbremsbetrieb mit dem Druckregelkreis für eine Achse das der Achse zugeordnete Balanceventil (MV_BVA, MV_BHA) geöffnet ist.

6. Verfahren nach einem der vorhergehenden Ansprüche, **dadurch gekennzeichnet, daß** die Hinterachse (HA) ungebremst ist, wenn alle Ventilanordnungen stromlos sind.

7. Vorrichtung zur Steuerung einer Bremsanlage eines Kraftfahrzeugs, mit einer Steuereinheit (100), welche
- einen Bremswunsch in Sollradbremsdrücke für die einzelnen Radbremsen (16, 18, 20, 22) umsetzt und
- den Radbremsdruck unter Berücksichtigung des gemessenen Radbremsdrucks auf den Sollradbremsdruck einregelt,
- abhängig von der Fehlerart verschiedene Notbremsbetriebe einleitet,
wobei die Steuereinheit (100)
- eine Fehlerüberwachung zur Ermittlung unterschiedlicher Fehlerarten enthält, und
- Mittel (102) aufweist, die in Abhängigkeit vorgegebener Fehlerarten verschiedene Notbremsbetriebe einleitet,
wobei die Mittel (102) im Notbremsbetrieb
- bei einem Fehler, der die Fähigkeit zum Druckaufbau oder Druckabbau an nur einem Rad betrifft, eine elektrische Steuerung, insbesondere im Rahmen einer Giermomentenbegrenzung, an den Radbremsen der restlichen drei Rädern vornehmen, wobei vorgesehen ist, dass bei diesem Notbremsbetrieb die Antiblockierschutzfunktion für die restlichen drei Räder aktiv bleibt und
- bei einem Fehler, der die Fähigkeit zum Druckaufbau oder Druckabbau an nur ein Rad einer Achse betrifft, ohne die Fähigkeit des Druckauf- und -abbaus an diesem Rad zu beeinträchtigen, eine gemeinsame Regelung der Achse dieses Rades im Rahmen eines Druckregelkreises durchführen, wobei Mittel vorgesehen sind, die bei einem Notbremsbetrieb die radindividuelle Antiblockierfunktion der betroffenen Achse abschalten, während die Antiblockierfunktion an der anderen Achse aufrechterhalten.

## Claims

1. Method for controlling a brake system of a motor vehicle, in which
- a braking request is implemented as set point wheel braking pressures for the individual wheel brakes (16, 18, 20, 22), and
- the wheel brake pressure is adjusted to the set point wheel brake pressure taking into account the measured wheel brake pressure,
fault monitoring being provided which determines different types of fault, different emergency braking modes being initiated as a function of predetermined fault modes, wherein, as an emergency braking mode
- in the event of a fault relating to the ability to build up pressure or reduce pressure at just one wheel, the wheel brakes of the three remaining wheels are controlled electrically, in particular within the scope of a yaw moment limitation, where there is provision that in this emergency braking mode the anti-lock brake function remains active for the remaining three wheels, and
- in the event of a fault relating to just one wheel of an axle without adversely affecting the ability to build up pressure and reduce pressure at this wheel, the axle of this wheel is regulated jointly within the scope of a pressure-regulating circuit, wherein there is provision that in an emergency braking mode the wheel-specific anti-lock brake function of the affected axle is switched off while the anti-lock brake function at the other axle is retained.

2. Method according to Claim 1, **characterized in that**, as an emergency braking mode, braking is performed at one wheel by means of a muscle force mode, and the remaining three wheels are regulated electrically.

3. Method according to one of the preceding claims, **characterized in that** the fault which affects just one wheel of an axle is a fault in the region of the valve arrangement of the hydraulic unit (14).

4. Method according to one of the preceding claims, **characterized in that** the fault which affects just one wheel of an axle without adversely affecting the ability to build up pressure and reduce pressure is a pressure sensor fault.

5. Method according to one of the preceding claims, **characterized in that** in the emergency operating mode with the pressure-regulating circuit for one axle the balance valve (MV_BVA, MV_BHA) which is assigned to the axle is opened.

6. Method according to one of the preceding claims, **characterized in that** the rear axle (HA) is unbraked if all the valve arrangements are not energized.

7. Device for controlling a brake system of a motor vehicle, having a control unit (100) which
- converts a braking request into set point wheel braking pressures for the individual wheel brakes (16, 18, 20, 22), and
- adjusts the wheel brake pressure to the set point wheel brake pressure while taking into account the measured wheel brake pressure,
- initiates various emergency operating modes as a function of the type of fault,
wherein the control unit (100)
- contains a fault monitoring means for determining different types of fault, and
- has means (102) which initiates various emergency braking modes as a function of predefined types of fault,
wherein in the emergency braking mode,
- in the event of a fault relating to the ability to build up pressure or reduce pressure at just one wheel, the means (102) performs electrical control, in particular within the scope of a yaw moment limitation, at the wheel brakes of the remaining three wheels, where there is provision that in this emergency braking mode the anti-lock brake function remains active for the remaining three wheels and
- in the event of a fault relating to the ability to build up pressure or reduce pressure at just one wheel of an axle without adversely affecting the ability to build up pressure and reduce pressure at this wheel, the means (102) carries out common regulation of the axle of this wheel within the scope of a pressure-regulating circuit, where means are provided which, in the event of an emergency braking mode, switch off the wheel-specific anti-lock braking function of the affected axle while the anti-lock braking function at the other axle is maintained.

## Revendications

1. Procédé de commande d'un système de freinage d'un véhicule, dans lequel
- on convertit une demande de freinage en pressions de freinage de consigne des roues pour les freins respectifs des roues (16, 18, 20, 22),
- on asservit la pression de freinage des roues, à la pression de freinage de consigne des roues, en tenant compte de la pression mesurée de freinage des roues,
- un système de surveillance des taux d'erreurs détermine les différents types d'anomalies et, en fonction des types prédéterminés d'anomalies, différents fonctionnements de freinage d'urgence sont engagés, et
en tant que fonctionnement de freinage d'urgence :
- en cas d'une anomalie qui concerne la capacité d'élévation de la pression ou de réduction de la pression sur une seule roue, une commande électrique des freins des trois roues restantes est effectuée, en particulier dans le cadre d'une limitation du couple de lacet, et durant ce fonctionnement de freinage d'urgence, la fonction de protection antiblocage reste active pour les trois roues restantes, et
- en cas d'une anomalie qui concerne seulement une roue d'un essieu, sans détériorer la capacité d'élévation et de réduction de la pression sur cette roue, une régulation commune de l'essieu de cette roue a lieu dans le cadre d'un circuit à commande par pression, et pendant un fonctionnement de freinage d'urgence, la fonction antiblocage individuelle des roues de l'essieu concerné est arrêtée, tandis que la fonction antiblocage de l'autre essieu est maintenue.

2. Procédé selon la revendication 1,
**caractérisé en ce que**
en tant que fonctionnement de freinage d'urgence, un freinage par la force musculaire est réalisé sur une roue et une régulation électrique est effectuée sur les trois roues restantes.

3. Procédé selon l'une des revendications précédentes,
**caractérisé en ce que**
l'anomalie qui concerne seulement une roue d'un essieu est une anomalie dans le domaine des dispositifs de soupapes de l'unité hydraulique (14).

4. Procédé selon l'une des revendications précédentes,
**caractérisé en ce que**
l'anomalie qui concerne seulement une roue d'un essieu, sans détériorer la capacité d'élévation et de réduction de la pression, est une anomalie du capteur de pression.

5. Procédé selon l'une des revendications précédentes,
**caractérisé en ce que**
pendant un fonctionnement de freinage d'urgence avec le circuit à commande par pression d'un essieu, la soupape d'équilibrage (MV_BVA, MV_BHA) associée à l'essieu est ouverte.

6. Procédé selon l'une des revendications précédentes,
**caractérisé en ce que**
l'essieu arrière (HA) n'est pas freiné lorsque tous les dispositifs de soupape sont hors tension.

7. Dispositif de contrôle d'un système de freinage d'un véhicule, avec une unité de contrôle (100) qui
- convertit une demande de freinage en pressions de freinage de consigne des freins respectifs des roues (16, 18, 20, 22) et
- en tenant compte de la pression mesurée de freinage des roues, asservit la pression de freinage des roues, à la pression de freinage de consigne des roues,
- engage différents fonctionnements de freinage d'urgence en fonction du type d'anomalie, et
dans lequel l'unité de contrôle (10)
- contient un système de surveillance des anomalies pour déterminer les différents types d'anomalies, et
- présente des moyens (102) qui engagent différents fonctionnements de freinage d'urgence en fonction de types prédéterminés d'anomalies,
et les moyens (102) pendant le fonctionnement de freinage d'urgence
- dans le cas d'une anomalie qui concerne la capacité d'élévation de la pression ou de réduction de la pression sur une seule roue, effectuent une commande électrique, en particulier dans le cadre d'une limitation du couple de lacet sur les freins de roue des trois roues restantes, et durant ce fonctionnement de freinage d'urgence, la fonction de protection antiblocage reste active pour les trois roues restantes, et
- dans le cas d'une anomalie qui concerne la capacité d'élévation de la pression ou de réduction de la pression sur une seule roue d'un essieu, sans détériorer la capacité d'élévation et de réduction de la pression sur cette roue, effectuent une régulation commune de l'essieu de cette roue dans le cadre d'un circuit à commande par pression, et pendant un fonctionnement de freinage d'urgence, des moyens arrêtent la fonction antiblocage individuelle des roues de l'essieu concerné, tandis qu'ils maintiennent la fonction antiblocage sur l'autre essieu.
